# FASCICULE DE BREVET EUROPEEN

(11) **EP 0 576 575 B1**
(45) Date de publication et mention de la délivrance du brevet: **29.05.1996**
(21) Numéro de dépôt: 92908892.0
(22) Date de dépôt: 20.03.1992
(51) Int. Cl.: C04B 41/00, C04B 41/87

(54) **PROCEDE DE PREPARATION DE CORPS EN CERAMIQUE EXEMPTS D'AUTO-ADHESION SOUS CONTRAINTE OU EN COURS DE VIEILLISSEMENT**
Verfahren zur Herstellung eines unter Spannungsbelastung oder während der Alterungvon Auto-adhäsion freien keramischen Köorpers
METHOD FOR PREPARING CERAMIC BODIES WHICH DO NOT SELF-ADHERE UNDER STRESS OR DURING AGEING

(30) Priorité: 21.03.1991 FR 9103454
(43) Date de publication de la demande: 05.01.1994
(73) Titulaire: COMMISSARIAT A L'ENERGIE ATOMIQUE, F-75015 Paris (FR)
(72) Inventeur: LE GRESSUS, Claude, F-78830 Fontenay-le-Fleury (FR); FAURE, Claude, F-77150 Lesigny (FR); BACH, Pierre, F-94700 Maison-Alfort (FR); BLAISE, Guy, F-92110 Clichy (FR); TREHEUX, Daniel, F-69100 Villeurbanne (FR)
(74) Mandataire: Signore, Robert
(86) Numéro de dépôt international: FR9200258
(87) Numéro de publication internationale: WO9216473

(56) Documents cités:
- WO-A-86/04548
- DE-A- 2 108 363
- DE-A- 2 437 821
- DE-A- 2 834 146
- DE-U- 8 715 044
- JOURNAL OF THE AMERICAN CERAMIC SOCIETY, vol. 67, no. 2, février 1984; C.J. McHARGUE et al., pp. 117-123

## Description

La présente invention a trait au domaine des corps isolants diélectriques utilisés sous frottement et notamment des céramiques. Bien que de tels corps comprennent notamment des corps organiques tels que des polymères et isolants monolithiques ou composites, la présente invention sera décrite en se limitant au cas exemplaire des céramiques étant bien entendu que ce n'est là qu'un exemple et qu'il ne doit pas être interprété comme ayant un caractère limitatif vis-à-vis des applications de l'invention.

A l'heure actuelle, il existe un grand nombre de dispositifs mécaniques à friction qui utilisent des éléments mobiles en céramique en contact mécanique Les uns avec les autres. C'est le cas en particulier des moteurs thermiques où des pièces en céramique sont amenées à glisser les unes par rapport aux autres, c'est le cas également de certains embrayages, de paliers spéciaux ou de systèmes de roulements réalisés à partir de pièces en céramique. C'est aussi le cas de façon de plus en plus fréquente dans le domaine de la robinetterie où la céramique est de plus en plus utilisée pour réaliser des clapets.

De façon schématique, les clapets de robinets sont constitués de deux pièces, en général en forme de disque, percées d'ouvertures décentrées par rapport à l'axe de rotation du robinet et susceptibles de glisser les unes sur les autres. Selon la position relative de l'un des disques par rapport à l'autre, les ouvertures coïncident plus ou moins ce qui permet le contrôle du passage d'un fluide. Les surfaces des pièces en céramique en contact ont subi un traitement de finition qui leur assure une rugosité et une planéité propres à la réalisation de l'étanchéité du robinet. L'utilisation de pièces en céramique dans ce domaine et dans les domaines cités précédemment présente de nombreux avantages parmi lesquels on peut citer une étanchéité parfaite, une absence d'usure même après un fonctionnement prolongé, une inaltérabilité et une résistance très élevée aux agents chimiques même les plus agressifs.

Malgré tout, on constate malheureusement que les forces d'adhésion entre les pièces en céramique en contact et sous pression évoluent spontanément en fonction de nombreux paramètres et en particulier de la durée de fonctionnement. Notamment, un arrêt prolongé, sous pression, de l'utilisation de ces pièces conduit souvent à une augmentation considérable du coefficient de frottement et même parfois jusqu'à un grippage ou un blocage total auquel il est pratiquement impossible de remédier. Ce défaut des structures de frottement en céramique, pour lequel jusqu'à ce jour il n'y avait pas de remède connu, mettait en péril l'avenir de ces produits dans ce type d'application.

Le document DE-U-8 715 044 divulgue un robinet pour des armatures sanitaires fonctionnant à l'aide de deux pièces en matériau céramique mobiles l'une par rapport à l'autre et présentant des ouvertures localisées. La céramique peut être de l'oxyde d'aluminium et l'une des deux pièces peut contenir un produit d'addition. Comme produit d'addition sont mentionnés le magnésium et le manganèse. Ces deux ajouts sont mentionnés comme étant de nature à faciliter le glissement d'une pièce sur l'autre.

La présente invention a précisément pour objet un procédé de préparation de corps en céramique pour pièces en frottement exempts de phénomènes d'auto-adhésion sous contrainte ou en cours de vieillissement, qui permet de remédier complètement et de façon définitive aux inconvénients qui viennent d'être rappelés.

Ce procédé de préparation de corps en céramique pour pièces en frottement dans lequel on soumet le composant chimique constituant la céramique à des opérations successives de pressage, de frittage, de polissage de la surface obtenue, de décapage de la gangue solide résultant du polissage et d'un grillage en présence d'oxygène se caractérise en ce que l'on complète les opérations précédentes par un traitement ayant pour but d'augmenter la susceptibilité diélectrique et de la rendre homogène dans la masse au voisinage des surfaces de frottement qui sont destinées à entrer en contact les unes avec les autres, et d'augmenter la mobilité des charges.

Le moyen essentiel de la présente invention qui consiste à traiter les céramiques pour obtenir une augmentation de leur susceptibilité diélectrique en la rendant homogène dans la masse découle de travaux théoriques récents qui ont mis en évidence le fait que les phénomènes d'auto-adhésion, de grippage et de blocage précédemment observés étaient d'origine électrostatique.

La théorie électrostatique de l'adhésion repose sur le calcul de la pression due à la présence de charges électriques localisées à l'interface des matériaux isolants ayant différentes susceptibilités diélectriques. On a montré expérimentalement qu'une énergie de polarisation s'accumule dans tout matériau isolant autour des défauts (au sens de la physique du solide) sous l'effet, soit d'une contrainte électrique, soit d'une contrainte mécanique. Plus l'énergie de polarisation est élevée, plus la force d'adhésion est grande. La dissipation de cette énergie peut se produire par relaxation avec ou sans modification du diélectrique, cette modification pouvant aller jusqu'à la destruction du matériau.

Ainsi les propriétés diélectriques et mécaniques des matériaux isolants sont naturellement corrélées, puisqu'elles traduisent sous deux formes différentes les propriétés de la matière. Les paramètres microscopiques dont découlent ces propriétés dépendent de la susceptibilité diélectrique des matériaux en contact, de la nature et de la densité des défauts.

La solution pour améliorer les propriétés de non adhésion consiste donc à mieux répartir les défauts dans le matériau de façon à ce que leur densité autour des zones de contact soit la plus faible possible et donc que les charges piégées sur ces défauts soient réparties dans la masse. C'est le sens de l'augmentation de susceptibilité électrique préconisée dans le procédé objet de l'invention.

Selon une première caractéristique du procédé de préparation de corps en céramique objet de l'invention, l'augmentation de susceptibilité diélectrique est obtenue par dopage de l'isolant à l'aide d'au moins un oxyde métallique lequel est choisi de préférence parmi les oxydes de manganèse et de titane. En effet, ces deux derniers oxydes ont des propriétés électrochimiques qui leur permettent, dès lors qu'ils sont insérés par dopage dans la masse de la céramique, d'augmenter la mobilité des charges piégées dans les puits de potentiel du matériau.

Selon une autre caractéristique du procédé objet de l'invention, cette même augmentation de susceptibilité diélectrique de la céramique est obtenue par une irradiation à l'aide de rayonnements ionisants. Les rayonnements ionisants, par exemple le plus souvent les rayonnements X ou gamma, augmentent le nombre de défauts présents au voisinage des surfaces incriminées et augmentent par là même la mobilité des charges électriques piégées dans les puits de potentiel entourant les défauts.

L'intensité des traitements effectués pour guérir Les surfaces de leur propension naturelle à l'augmentation du coefficient de frottement est laissée à l'appréciation de l'homme de métier compte tenu du fait que la présente invention propose également un procédé de contrôle de la fabrication des céramiques ainsi obtenues. Ce procédé se caractérise en ce que l'on examine les corps ainsi traités avec un microscope électronique utilisé comme sonde de mesure de potentiel électrostatique et en ce que l'on détermine ainsi la permittivité de la céramique, la répartition des défauts et la puissance électrostatique dissipable dans le milieu diélectrique que constitue la céramique sans provoquer de dégradation de celle-ci.

Dans la pratique, la préparation d'une céramique dénuée d'un phénomène d'auto-adhésion nécessite une première phase de traitement suivie d'une mise en oeuvre du procédé d'estimation du résultat obtenu à la suite duquel un traitement complémentaire et une autre expertise de contrôle pourront être encore nécessaires. Cas par cas, l'homme de métier sera ainsi à même de surveiller la fabrication pour l'amener au point où la céramique a définitivement les propriétés souhaitées.

On décrira maintenant un exemple de mise en oeuvre du procédé objet de l'invention étant entendu que ce procédé a valeur surtout illustrative et n'est pas limitatif quant aux conditions de mise en oeuvre de celle-ci.

On traitera le cas d'alumines industrielles utilisées pour des obturations de robinets et mises en forme par les procédés classiques de pressage et de frittage. Un polissage enlève une épaisseur de matériau de l'ordre de 10 microns. A l'issue de l'opération de polissage les disques en céramique doivent avoir la rugosité et la planéité requises pour assurer l'étanchéité. La surface est cependant recouverte d'une gangue solide, épaisse, adhérente, composée de tous les produits et déchets de polissage. Le décapage de la gangue se fait dans des bains successifs (différents pH, température 200°C, ultrasons). Un dernier traitement, en général un grillage à l'air ou sous oxygène vers 1500° permet de saturer les liaisons qui pourraient être disponibles et de relaxer les contraintes résiduelles. Toutes ces opérations connues représentent les règles de l'art des céramistes.

Selon l'invention, on modifie la répartition des défauts de surface et de volume restant après usinage, par dopage et/ou par irradiation.

Par dopage, on augmente la susceptibilité diélectrique des couches superficielles. La susceptibilité représente en fait une vue macroscopique des défauts. Pour la modifier, on fait diffuser un ou plusieurs oxydes métalliques. A titre d'exemple, l'oxyde de manganèse ou l'oxyde de titane est bien adapté dans un certain nombre de cas. La température et la durée de la diffusion sont déterminées à l'aide de la méthode électrostatique qui sera rappelée plus loin. A titre d'exemple, un optimum de gradient de la susceptibilité diélectrique a été obtenu par diffusion d'oxyde de titane à 1300°C pendant 3 minutes. Avec ce dopage, on constate que le bruit de frottement est nettement moins élevé, qu'il n'y a pas de secousses et que le frottement est normal au démarrage.

Parvenu à ce stade de la fabrication, l'étape de contrôle de fabrication devient nécessaire.

Grâce aux corrélations précédemment établies entre les propriétés d'adhésion et les propriétés électriques, on optimise le traitement par des contrôles électrostatiques. C'est une méthode extrêmement performante, sensible et rapide. Elle évite les opérations mécaniques classiques, qui consistent habituellement à mesurer le coefficient de frottement après un nombre élevé de passages plan sur plan.

Les contrôles de fabrication de type électrostatique se font avec un microscope électronique à balayage (MEB).

Le procédé consiste à charger électriquement une zone de l'échantillon isolant avec le faisceau du MEB à l'énergie nominale de l'appareil (50 keV par exemple), puis à observer la zone irradiée avec le faisceau du MEB à faible énergie, 0,3 keV par exemple. La zone chargée réfléchit le faisceau et il se produit un "effet miroir". La mesure des dimensions du miroir en fonction de la tension d'observation permet de tracer une courbe dont la pente est corrélée à la distribution des défauts et donc aux propriétés d'adhésion du matériau. On détermine ainsi la permittivité ε de la céramique, la répartition des défauts et la puissance électrique que l'on peut dissiper dans la céramique sans provoquer de dégradation de celle-ci. l'optimum d'un traitement (dopage ou irradiation) de la céramique est obtenu lorsque la pente de la courbe atteint un maximum. Tout appareil standard du commerce est utilisable, à condition qu'il soit équipé d'une mesure du courant d'échantillon et qu'il puisse travailler à très basse tension.

## Revendications

1. Procédé de préparation de corps en céramique pour pièces en frottement, exempts d'auto-adhésion sous contrainte ou en cours de vieillissement, dans lequel on soumet le composant chimique constituant la céramique à des opérations successives de pressage, de frittage, de polissage de la surface obtenue, de décapage de la gangue solide résultant du polissage et d'un grillage en présence d'oxygène, caractérisé en ce que l'on complète les opérations précédentes par un traitement ayant pour but d'augmenter la susceptibilité diélectrique, et de la rendre homogène dans la masse au voisinage des surfaces de frottement qui sont destinées à entrer en contact les unes avec les autres, et d'augmenter la mobilité des charges.

2. Procédé de préparation de corps en céramique selon la revendication 1, caractérisé en ce que l'augmentation de susceptibilité diélectrique est obtenue par dopage de l'isolant à l'aide d'au moins un oxyde métallique.

3. Procédé de préparation de corps en céramique selon la revendication 2, caractérisé en ce que l'oxyde métallique est choisi parmi les oxydes de manganèse et de titane.

4. Procédé de préparation de corps en céramique selon la revendication 1, caractérisé en ce que l'augmentation de susceptibilité diélectrique est obtenue par une irradiation à l'aide de rayonnements ionisants.

5. Procédé de préparation de corps en céramique selon la revendication 4, caractérisé en ce que les rayonnements sont des rayonnements X, à une dose voisine de 1000 Rad.

6. Procédé de contrôle de la fabrication de céramiques selon l'une quelconque des revendications 1 à 5 précédentes, caractérisé en ce que l'on examine les corps ainsi traités avec un microscope électronique utilisé comme sonde de mesure de potentiel électrostatique et en ce que l'on détermine ainsi la permittivité ε de la céramique, la répartition des défauts et la puissance électrostatique dissipable dans le milieu diélectrique que constitue la céramique sans provoquer de dégradation de celle-ci.

7. Procédé de contrôle de la fabrication de céramiques selon la revendication 6, caractérisé en ce qu'il comprend les étapes de :
- charge d'une zone de matériau céramique obtenu précédemment grâce à un faisceau d'énergie relativement élevée délivré par le microscope électronique à balayage,
- émission vers ladite zone chargée d'un faisceau d'énergie relativement faible délivré par ledit microscope,
- détection par ledit microscope du faisceau de faible énergie réfléchi.

## Patentansprüche

1. Verfahren zur Herstellung von Keramikkörpern für Reibungsteile, frei von Autoadhäsion bzw. Selbsthaftung unter Belastung oder im Laufe der Alterung, bei dem man die die Keramik bildende chemische Komponente aufeinanderfolgenden Operationen des Pressens, Sinterns und Polierens der erhaltenen Oberfläche, des Dekapierens bzw. Beizens der vom Polieren resultierenden festen Schale bzw. Haut (gangue solide) und einem Brennen im Beisein von Sauerstoff unterzieht,
**dadurch gekennzeichnet,**
daß man die vorhergehenden Operationen durch eine Behandlung vervollständigt, die den Zweck hat, die dielektrische Fähigkeit zu erhöhen und sie homogen zu machen in der Masse nahe den Reibungsoberflächen, die dazu bestimmmt sind, miteinander in Kontakt zu kommen, und die Beweglichkeit der Ladungen zu erhöhen.

2. Verfahren zur Herstellung eines Keramikkörpers nach Anspruch 1, dadurch gekennzeichnet, daß die Zunahme der dielektrischen Fähigkeit erreicht wird durch Dotierung des Isolators mit Hilfe von wenigstens einem metallischen Oxid.

3. Verfahren zur Herstellung eines Keramikkörpers nach Anspruch 2, dadurch gekennzeichnet, daß das metallische Oxid ausgewählt wird unter den Oxiden von Mangan und von Titan.

4. Verfahren zur Herstellung eines Keramikkörpers nach Anspruch 1, dadurch gekennzeichnet, daß die Zunahme der dielektrischen Fähigkeit erreicht wird durch eine Bestrahlung mit ionisierenden Strahlen.

5. Verfahren zur Herstellung eines Keramikkörpers nach Anspruch 4, dadurch gekennzeichnet, daß die Strahlungen Röntgen-Strahlungen mit einer Dosis um 1000 Rad sind.

6. Verfahren zur Kontrolle der Herstellung von Keramiken nach einem der vorangehenden Ansprüche 1 bis 5, dadurch gekennzeichnet, daß man die derart behandelten Körper mit einem Elektronenmikroskop prüft, das als Meßsonde von elektrostatischem Potential benutzt wird, und dadurch, daß man so die Permittivität ε der Keramik, die Verteilung der Fehler und die in dem die Keramik bildenden dielektrischen Medium ableitbare elektrostatische Leistung bestimmt, ohne eine Beschädigung bzw. Verschlechterung von dieser zu verursachen.

7. Kontrollverfahren der Herstellung von Keramiken nach Anspruch 6, dadurch gekennzeichnet, daß es folgende Schritte umfaßt:
- Aufladung einer vorher hergestellten Zone aus keramischem Material dank eines Bündels bzw. Strahls von relativ hoher Energie, geliefert durch das Rasterelektronenmikroskop,
- Emission eines durch besagtes Mikroskop gelieferten Strahls relativ schwacher Energie in Richtung auf genannte geladene Zone,
- Erfassung des reflektierten Strahls relativ schwacher Energie durch besagtes Elektronenmikroskop.

## Claims

1. Process for the preparation of ceramic materials for friction parts, free from auto-adhesion under stress and during aging, in which the chemical component constituting the ceramic material is subject to successive operations of pressing, sintering, polishing the surface obtained, cleaning the solid gangue resulting from the polishing operation and a roasting in the presence of oxygen, characterized in that the preceding operations are completed by a treatment aimed at increasing the dielectric susceptibility and making it homogeneous in the mass in the vicinity of the friction surfaces intended to come into contact with one another, and increase the mobility of the charges.

2. Process for the preparation of ceramic materials according to claim 1, characterized in that the dielectric susceptibility increase is obtained by doping the insulant with the aid of at least one metal oxide.

3. Process for the preparation of ceramic materials according to claim 2, characterized in that the metal oxide is chosen from among manganese and titanium oxide.

4. Process for the preparation of ceramic materials according to claim 1, characterized in that the dielectric susceptibility increase is brought about by irradiation with the aid of ionizing rays.

5. Process for the preparation of ceramic materials according to claim 4, characterized in that the radiation is constituted by X-rays with a dose close to 1000 Rad.

6. Process for checking the manufacture of ceramic materials according to any one of the claims 1 to 5, characterized in that the thus treated materials are examined with an electron microscope used as an electrostatic potential measuring probe and in that in this way the permittivity ε of the ceramic is determined, together with the distribution of the defects and the electrostatic power which can be dissipated in the dielectric medium constituting the ceramic material without bringing about the deterioration of the latter.

7. Process for checking the manufacture of ceramic materials according to claim 6, characterized in that it comprises:
charging a previously obtained ceramic material zone by a relatively high energy beam supplied by the electron microscope,
emitting towards said charged zone a relatively low energy beam supplied by said microscope,
detecting by said microscope of the reflected low energy beam.
